# EUROPÄISCHE PATENTSCHRIFT

(11) **EP 2 406 295 B1**
(45) Veröffentlichungstag und Bekanntmachung des Hinweises auf die Patenterteilung: **08.05.2013**
(21) Anmeldenummer: 10706673.0
(22) Anmeldetag: 08.03.2010
(51) Int. Cl.: C08F 218/08, C08F 210/02, C08J 3/12, C08L 101/00

(54) **VERWENDUNG VON VINYLESTER-COPOLYMEREN ALS LOW-PROFILE-ADDITIVE (LPA)**
USE OF VINYL ESTER COPOLYMERS AS LOW-PROFILE ADDITIVES (LPAS)
UTILISATION DE COPOLYMÈRES D'ESTER VINYLIQUE EN TANT QU'ADDITIFS DE PROFIL BAS (LPA)

(30) Priorität: 11.03.2009 DE 102009001498
(43) Veröffentlichungstag der Anmeldung: 18.01.2012
(73) Patentinhaber: Wacker Chemie AG, 81737 München (DE)
(72) Erfinder: HASHEMZADEH, Abdulmajid, 84508 Burgkirchen (DE); ZARKA, Michael Tobias, 84489 Burghausen (DE)
(74) Vertreter: Fritz, Helmut
(86) Internationale Anmeldenummer: PCT/EP2010/052877
(87) Internationale Veröffentlichungsnummer: WO 2010/102966

(56) Entgegenhaltungen:
- WO-A1-2007/104639

## Beschreibung

Die Erfindung betrifft die Verwendung von Vinylester-Copolymeren als Low-Profile-Additive (LPA), Verfahren zur Herstellung von radikalisch vernetzbaren Polymerisat-Zusammensetzungen sowie Komposit-Bauteile.

Für die Herstellung von Komposit-Bauteilen werden häufig radikalisch vernetzbare Polymerisat-Zusammensetzungen auf Basis von beispielsweise ungesättigten Polyesterharzen (UP-Harze) eingesetzt. Ungesättigte Polyesterharze sind erhältlich durch Polykondensation von Dicarbonsäuren oder Dicarbonsäureanhydriden mit Polyolen. Die radikalisch vernetzbaren Polymerisat-Zusammensetzungen enthalten des Weiteren Monomere mit ethylenisch ungesättigten Gruppen, im Allgemeinen Styrol. Styrol wird der radikalisch vernetzbaren Polymerisat-Zusammensetzung beispielsweise zugegeben, um das vernetzbare Polymerisat zu lösen und um sicherzustellen, dass die radikalisch vernetzbare Polymerisat-Zusammensetzung eine fließfähige Masse ist. Als weitere Bestandteile enthalten die radikalisch vernetzbaren Polymerisat-zusammensetzungen oftmals noch Fasermaterialien wie Glasfasern, Carbonfasern oder entsprechende Fasermatten (Fiber Reinforced Plastic composites = FPR composites), die zu einer Verstärkung der durch Aushärtung der radikalisch vernetzbaren Polymerisat-Zusammensetzungen erhältlichen Komposit-Bauteile führen.

Ein Problem bei der Verarbeitung solcher radikalisch vernetzbaren Polymerisat-Zusammensetzungen zu Komposit-Bauteilen ist der Volumenschwund während der Härtung der Polymerisat-Zusammensetzung. Zur Reduzierung des Schrumpfs bei der Aushärtung werden den radikalisch vernetzbaren Polymerisat-Zusammensetzungen daher sogenannte Low-Profile-Additive zugegeben. Low-Profile-Additive reduzieren das Schrumpfen beim Aushärten, bauen Eigenspannungen ab, verringern Mikrorissbildung, und erleichtern das Einhalten von Fertigungstoleranzen. Bei den LPA handelt es sich üblicherweise um thermoplastische Homo- und Copolymere von Polystyrol, Polymethylmethacrylat oder Polyvinylacetat, die in Form von Festharzen eingesetzt werden. So werden beispielsweise in der US-A 3718714 oder der DE-A 102006019686 Copolymerisate auf Basis von Vinylacetat und ethylenisch ungesättigten Carbonsäuren als LPA für die Herstellung von Komposit-Bauteilen auf Basis von ungesättigten Polyesterharzen empfohlen. Die EP-A 0075765 empfiehlt für die Herstellung von Komposit-Bauteilen radikalisch vernetzbare Polymerisat-Zusammensetzungen, die als LPA Polymerisate auf Basis von Vinylacetat bzw. Alkylacrylaten und zusätzlich ethylenisch ungesättigte Fettsäureestern enthalten.

Die EP-A 0337931 beschreibt LPA in Form von redispergierbaren Polymerpulver auf Basis von Copolymerisaten von Vinylacetat und Versaticsäure-Vinylester für die Herstellung von Komposit-Bauteilen bei niedrigen Temperaturen.

Die bisher als LPA gängigen Polyvinylester-Copolymere bewirken im Vergleich zu Polystyrol- und Polymethylmethacrylat zwar meist einen großen Antischrumpfeffekt, können aber hinsichtlich der Pigmentierung nicht befriedigen. Unter guter Pigmentierung wird verstanden, dass bei Aushärten von Pigmenten enthaltenden radikalisch aushärtbaren Polymerisat-Zusammensetzungen Komposit-Bauteile mit einem einheitlichen Farbbild erhalten werden; d.h. die Pigmente sind darin gleichmäßig verteilt. Wohingegen bei einer schlechten Pigmentierung die Pigmente in den Komposit-Bauteilen ungleichmäßig verteilt und ein sogenannter Marmoreffekt auftritt.

Damit die LPA in den radikalisch aushärtbaren Polymerisat-Zusammensetzungen ihre Wirkung entfalten können, müssen die LPA in gelöster Form vorliegen. Nachteiligerweise dauert das Auflösen der gängigen LPA sehr lange. Deswegen werden die LPA für gewöhnlich zuerst in einem separaten, zeitaufwändigen Verfahrensschritt in Styrol gelöst und dann in dieser Form in die radikalisch aushärtbaren Polymerisat-Zusammensetzungen eingebracht. Ein weiteres Problem stellt die Lagerung der LPA enthaltenden styrolischen Lösungen dar, da derartige Lösungen zur unkontrollierten Polymerisation neigen und zusätzlich Maßnahmen zur Verhinderung der vorzeitigen Polymerisation ergriffen werden müssen.

Vor diesem Hintergrund bestand die Aufgabe, Low-Profile-Additive (LPA) in Form von Feststoffen bereitzustellen, die ohne aufwändige Verfahrensschritte zum Auflösen für die Herstellung von Komposit-Bauteilen eingesetzt werden können und dabei zu einem großen Antischrumpfeffekt und zudem zu einer guten Pigmentierung der Komposit-Bauteile führen.

Überraschenderweise wurde diese Aufgabe gelöst, indem Schutzkolloid-stabilisierte Vinylester-Ethylen-Copolymere in Form von Polymerpulvern als LPA eingesetzt wurden. Diese Pulver sind rieselfähig sowie blockfest und lassen sich leicht in radikalisch aushärtbare Polymerisat-Zusammensetzungen einarbeiten. Vinylester-Ethylen-Copolymere in Form von Festharzen sind dagegen im Allgemeinen klebrig, neigen zum Verblocken.

Gegenstand der Erfindung ist die Verwendung von Schutzkolloid-stabilisierten Vinylester-Ethylen-Copolymeren in Form von Polymerpulvern als Low-Profile-Additive (LPA).

Die Vinylester-Ethylen-Copolymere können erhalten werden durch radikalisch initiierte Polymerisation von
a) einem oder mehreren Vinylestern und
b) Ethylen und gegebenenfalls
c) einem oder mehreren weiteren ethylenisch ungesättigten Comonomeren.

Ethylen b) wird zur Herstellung der Vinylester-Ethylen-Copolymere vorzugsweise zu 5 bis 70 Gew.-%, besonders bevorzugt zu 10 bis 50 Gew.-% und am meisten bevorzugt zu 15 bis 40 Gew.-% eingesetzt, jeweils bezogen auf die Gesamtmasse der insgesamt eingesetzten Monomere zur Herstellung der Vinylester-Ethylen-Copolymere.

Geeignete Vinylester a) sind beispielsweise Vinylester von Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 13 C-Atomen, beispielsweise VeoVa9R oder VeoVa10R (Handelsnamen der Firma Shell). Besonders bevorzugt ist Vinylacetat.

Vinylester a) werden zur Herstellung der Vinylester-Ethylen-Copolymere vorzugsweise zu 30 bis 95 Gew.-%, besonders bevorzugt zu 50 bis 90 Gew.-% und am meisten bevorzugt zu 60 bis 85 Gew.-% eingesetzt, jeweils bezogen auf die Gesamtmasse der insgesamt eingesetzten Monomere zur Herstellung der Vinylester-Ethylen-Copolymere.

Als Comonomere c) können ein oder mehrere Monomere ausgewählt werden aus der Gruppe umfassend Methacrylsäureester oder Acrylsäureester von Carbonsäuren mit unverzweigten oder verzweigten Alkoholen mit 1 bis 15 C-Atomen, ethylenisch ungesättigte Silane, Vinylaromaten, Vinylhalogenide, Diene und von Ethylen verschiedene Olefine.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat, Hydroxyethylacrylat. Besonders bevorzugt sind Methylacrylat, Methylmethacrylat, n-Butylacrylat, Hydroxyethylacrylat und 2-Ethylhexylacrylat.

Bevorzugte Diene oder von Ethylen verschiedene Olefine sind Propylen und 1,3-Butadien. Bevorzugte Vinylaromaten sind Styrol und Vinyltoluol. Ein bevorzugtes Vinylhalogenid ist Vinylchlorid.

Die Comonomere c) werden zur Herstellung der Vinylester-Ethylen-Copolymere vorzugsweise zu 0 bis 45 Gew.-%, besonders bevorzugt zu 0 bis 10 Gew.-% eingesetzt, bezogen auf die Gesamtmasse der insgesamt eingesetzten Monomere zur Herstellung der Vinylester-Ethylen-Copolymere.

Gegebenenfalls können noch 0,05 bis 5 Gew.-%, vorzugsweise 1 bis 2 Gew.-%, bezogen auf das Gesamtgewicht der Vinylester-Ethylen-Copolymere, Hilfsmonomere copolymerisiert werden. Beispiele für Hilfsmonomere sind ethylenisch ungesättigte Carbonsäuren, vorzugsweise Acrylsäure, Methacrylsäure, Crotonsäure, Itaconsäure oder Fumarsäure, Maleinsäure, ethylenisch ungesättigte Carbonsäurenitrile, vorzugsweise Acrylnitril, Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure.

Beispiele für bevorzugte Vinylester-Ethylen-Copolymere sind Copolymere von einem oder mehreren Vinylestern mit Ethylen, Copolymere von einem oder mehreren Vinylestern mit Ethylen und einem oder mehreren Methacrylsäureestern oder Acrylsäureestern, Copolymere von einem oder mehreren Vinylestern mit Ethylen und einer oder mehreren ethylenisch ungesättigten Carbonsäuren, Copolymere von einem oder mehreren Vinylestern mit Ethylen und Vinylchlorid.

Besonders bevorzugt werden Copolymere von Vinylacetat mit 15 bis 40 Gew.-% Ethylen; Copolymere von Vinylacetat mit 5 bis 30 Gew.-% Ethylen und 1 bis 50 Gew.-% von einem oder mehreren weiteren, von Vinylacetat verschiedenen, Vinyleestern; Copolymere von Vinylacetat mit 5 bis 30 Gew.-% Ethylen und 1 bis 45 Gew.-% von einem oder mehreren Methacrylsäureestern oder Acrylsäureestern; Copolymere von Vinylacetat mit 5 bis 30 Gew.-% Ethylen und 1 bis 25 Gew.-% von einem oder mehreren weiteren, von Vinylacetat verschiedenen, Vinylestern und 1 bis 45 Gew.-% von einem oder mehreren Methacrylsäureestern oder Acrylsäureestern; Copolymere von Vinylacetat mit 1 bis 30 Gew.-% Ethylen und 1 bis 45 Gew.-% von einem oder mehreren ethylenisch ungesättigten Carbonsäuren; wobei die Copolymere jeweils noch die genannten Hilfsmonomere in den genannten Mengen enthalten können, und sich die Angaben in Gew.-% auf jeweils 100 Gew.-% aufaddieren.

Durch die Monomerauswahl bzw, durch die Auswahl der Gewichtsanteile der Comonomere resultieren Vinylester-Ethylen-Copolymere mit der gewünschten Glasübergangstemperatur Tg. Die Glasübergangstemperatur Tg der Copolymere kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Vinylester-Ethylen-Copolymere erfolgt in wässrigem Medium und bevorzugt nach dem Emulsions- oder Suspensionspolymerisationsverfahren - wie beispielsweise in DE-A 102006007282 beschrieben. Die Vinylester-Ethylen-Copolymere fallen dabei in Form von wässrigen Dispersionen an. Bei der Polymerisation können die gängigen Schutzkolloide und/oder Emulgatoren eingesetzt werden, wie in der DE-A 102006007282 beschrieben. Bevorzugt werden als Schutzkolloide teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 94 Mol-% und einer Höpplerviskosität, in 4 %-iger wässriger Lösung von 1 bis 30 mPas (Methode nach Höppler bei 20°C, DIN 53015). Die genannten Schutzkolloide sind mittels dem Fachmann bekannter Verfahren zugänglich und werden im Allgemeinen in einer Menge von insgesamt 1 bis 20 Gew.-%, bezogen auf das Gesamtgewicht der Monomere, bei der Polymerisation zugesetzt.

Die Vinylester-Ethylen-Copolymere in Form von wässrigen Dispersionen können nach gängigen Trocknungsverfahren zu entsprechenden Pulvern überführt werden. Dabei wird in der Regel eine Trocknungshilfe in einer Gesamtmenge von 3 bis 30 Gew.-%, vorzugsweise 5 bis 20 Gew.-%, bezogen auf die polymeren Bestandteile der Dispersion, eingesetzt. Als Trocknungshilfe sind die vorgenannten Polyvinylalkohole bevorzugt.

Die Glasübergangstemperatur Tg der Vinylester-Ethylen-Copolymere liegt vorzugsweise zwischen -40°C und + 30°C, besonders bevorzugt zwischen -40°C und + 5°C. Der mittlere Partikeldurchmesser der Schutzkolloid-stabilisierten Vinylester-Ethylen-Copolymere in Form von Polymerpulver liegt bevorzugt zwischen 0,1 und 500 Mikrometer, besonders bevorzugt zwischen 1 und 200 Mikrometer (Bestimmung nach Coulter).

Ein weiterer Gegenstand der Erfindung sind radikalisch vernetzbare Polymerisat-Zusammensetzungen enthaltend ein oder mehrere radikalisch vernetzbare Polymerisate, ein oder mehrere ethylenisch ungesättigte Monomere (reaktive Monomere) und gegebenenfalls Initiatoren, gegebenenfalls Füllstoffe sowie gegebenenfalls weitere Zusätze, dadurch gekennzeichnet, dass zusätzlich ein oder mehrere Schutzkolloid-stabilisierte Vinylester-Ethylen-Copolymere in Form von Polymerpulver enthalten sind.

Als reaktive Monomere sind beispielsweise dieselben Monomere geeignet, bevorzugt bzw. besonders bevorzugt, die auch für die Polymerisation zur Herstellung der Vinylester-Ethylen-Copolymere geeignet, bevorzugt bzw. besonders bevorzugt sind. Ganz besonders bevorzugte reaktive Monomere sind Styrol, Methylmethacrylat, Methylacrylat, Dipropylenglycoldiacrylat, Trimethylolpropantriacrylat, 1,6-Hexanedioldiacrylat, Pentaerythritoltriacrylat und Butylacrylat. Das am meisten bevorzugte reaktive Monomer ist Styrol.

Bevorzugte radikalisch vernetzbare Polymerisate sind ungesättigte Polyesterharze oder Vinylesterharze.

Die ungesättigten Polyesterharze sind Reaktionsprodukte von einer oder mehreren Dicarbonsäuren oder einer oder mehreren Dicarbonsäureanhydriden mit einem oder mehreren Polyolen. Die Herstellung der ungesättigten Polyesterharze ist dem Fachmann bekannt.

Vinylesterharze sind Reaktionsprodukte, die durch Polyadditionen oder Veresterungsreaktionen von Phenolderivaten und ethylenisch ungesättigten Mono- oder Dicarbonsäuren oder Dicarbonsäureanhydriden mit 3 bis 20-Kohlenstoffatomen, wie beispielsweise Acrylsäuren oder Methacrylsäuren entstehen. Bevorzugte Phenolderivate sind Bisphenol A und Phenol-Novolak. Die Herstellung der Vinylesterharze ist dem Fachmann bekannt.

Geeignete Initiatoren sind beispielsweise t-Butylperbenzoat, t-Butylperoxy-2-ethylhexanoat, t-Butylperoxypivalat, t-Butylperoxyneodecanoat, Dibenzoylperoxid, t-Amylperoxypivalat, Di-(2-ethylhexyl)peroxydicarbonat, 1,1-Bis(t-Butylperoxy)-3,3,5-trimethylcyclohexan, Di-(4-t-Butylcyclohexyl)peroxydicarbonat, Azobisisobutyronitril oder auch Photoinitiatoren, wie Benzophenon, Isopropyl-thioxanthon, Benzile (1,2 Diketone), Hydroxy-alkylketone, α-Aminoketone und Benzilketale.

Geeignete Füllstoffe sind beispielsweise Talkum, Aluminiumhydroxid, Kaolin, Calciumcarbonat, Dolomit, Glaskugeln oder Glasfasern, Quarz, Aluminiumoxid oder Bariumsulfat.

Die radikalisch vernetzbaren Polymerisat-Zusammensetzungen enthalten vorzugsweise 30 bis 60 Gew.-Teile radikalisch vernetzbare Polymerisate, 5 bis 40 Gew.-Teile Schutzkolloid-stabilisierte Vinylester-Ethylen-Copolymere in Form von Polymerpulver, 30 bis 160 Gew.-Teile reaktive Monomere, gegebenenfalls 0,5 bis 2 Gew.-Teile Initiatoren, gegebenenfalls Füllstoffe wie 50 bis 350 Gew.-Teile Calciumcarbonat, Verstärkungsmaterialien wie 25 bis 450 Gew.-Teile Glasfasern, Aramidfasern, Kohlefasern, gegebenenfalls weitere Additive wie 0,5 bis 3 Gew.-Teile Formtrennmittel, beispielsweise Zinkstearat, sowie gegebenenfalls weitere Zusatzstoffe, beispielsweise Pigmente, Verdicker, flammhemmende Zusätze.

Ein weiterer Gegenstand der Erfindung sind Verfahren zur Herstellung der radikalisch vernetzbaren Polymerisat-Zusammensetzungen durch Mischen von einem oder mehreren radikalisch vernetzbaren Polymerisaten, einem oder mehreren ethylenisch ungesättigten Monomeren (reaktive Monomere) und gegebenenfalls von Initiatoren, gegebenenfalls von Füllstoffen, gegebenenfalls von Verstärkungsmaterialien sowie gegebenenfalls von weiteren Additiven oder Zusätzen, dadurch gekennzeichnet, dass zusätzlich ein oder mehrere Schutzkolloid-stabilisierte Vinylester-Ethylen-Copolymere in Form von Polymerpulver beigemischt werden.

Die Schutzkolloid-stabilisierten Vinylester-Ethylen-Copolymere in Form von Polymerpulver können mit den weiteren Komponenten der radikalisch vernetzbaren Polymerisat-Zusammensetzungen in beliebiger Weise gemischt werden. Beispielsweise können die Vinylester-Ethylen-Copolymere in reaktiven Monomeren gelöst, emulgiert oder dispergiert werden und in dieser Form mit den weiteren Komponenten der radikalisch vernetzbaren Polymerisat-Zusammensetzungen gemischt werden. Die Vinylester-Ethylen-Copolymere werden vorzugsweise mit den radikalisch vernetzbaren Polymerisaten, den reaktiven Monomeren und gegebenenfalls weiteren flüssigen oder gelösten Komponenten der radikalisch vernetzbaren Polymerisat-Zusammensetzungen gemischt und anschließend mit den restlichen festen Komponenten der radikalisch vernetzbaren Polymerisat-Zusammensetzungen, wie beispielsweise Füllstoffen oder Verstärkungsmaterialien, gemischt. Alternativ kann auch zuerst eine flüssige Paste aus radikalisch vernetzbaren Polymerisaten, reaktiven Monomeren und gegebenenfalls weiteren Komponenten der radikalisch vernetzbaren Polymerisat-Zusammensetzungen hergestellt werden, der anschließend Vinylester-Ethylen-Copolymere sowie gegebenenfalls die restlichen Mengen an den restlichen Bestandteilen der radikalisch vernetzbaren Polymerisat-Zusammensetzungen zugegeben werden.

Das Mischen der Komponenten zur Herstellung der radikalisch vernetzbaren Polymerisat-Zusammensetzungen kann unter Einsatz der gängigen, dem Fachmann bekannten Vorrichtungen, wie beispielsweise Reaktoren, Rührkessel oder Mischer, und Rührer, wie beispielsweise Flügel-, Anker- oder Blattrührer, erfolgen.

Ein weiterer Gegenstand der Erfindung sind Komposit-Bauteile erhältlich durch Härten der radikalisch vernetzbaren Polymerisat-Zusammensetzungen.

Das Härten der radikalisch vernetzbaren Polymerisat-Zusammensetzungen erfolgt vorzugsweise bei Temperaturen von ≥ 0°C, besonders bevorzugt von 20 bis 200°C und am meisten bevorzugt von 20 bis 165°C. Vorzugsweise erfolgt das Härten in Gegenwart von einem oder mehreren Initiatoren durch radikalisch initiierte Polymerisation. Gegebenenfalls werden die radikalisch vernetzbaren Polymerisat-Zusammensetzungen beim Härten bei der jeweiligen Temperatur unter Anwendung von Drücken von ≥ 1 mbar, besonders bevorzugt von 1 bis 200.000 mbar und am meisten bevorzugt von 1.000 bis 200.000 mbar verpresst.

Die Komposit-Bauteile können nach allen gängigen Herstellungsverfahren aus den radikalisch vernetzbaren Polymerisat-Zusammensetzungen erhalten werden, wie beispielsweise mittels der Sheet Molding Compound Technology (SMC), Bulk Molding Compound Technology (BMC), Resin Transfer Molding (RTM) oder Resin Injection Molding (RIM).

Vorzugsweise werden die Komposit-Bauteile mittels der BMC-Technik (Bulk Molding Compound) oder der SMC-Technik (Sheet Molding Compound) hergestellt.

Beim BMC-Verfahren werden die Lösungen der radikalisch vernetzbaren Polymerisate in reaktivem Monomer und die Vinylester-Ethylen-Copolymere und gegebenenfalls die weiteren Komponenten wie der Initiator, Füllstoff, Formtrennmittel oder weitere Polymerisate oder Zusatzstoffe zu einer pastösen Masse vermischt, danach werden gegebenenfalls Glasfasern zugemischt, und anschließend werden die so erhaltenen radikalisch vernetzbaren Polymerisat-Zusammensetzungen unter Anwendung von Druck und Temperatur zum Komposit-Bauteil ausgehärtet. Beispielsweise werden mit dieser Technik Reflektoren für Autoscheinwerfer hergestellt.

Beim SMC-Verfahren wird analog dem BMC-Verfahren eine pastöse Masse aus radikalisch vernetzbaren Polymerisaten in reaktivem Monomer, den Vinylester-Ethylen-Copolymeren, Vernetzungskatalysator, Füllstoff, Formtrennmittel sowie gegebenenfalls weiteren Zusatzstoffen hergestellt, welche auf zwei Trägerfolien aufgetragen wird. Anschließend werden geschnittene Glasfaserrovings auf eine der beiden Schichten aufgestreut und schließlich beide Trägerfolien miteinander vereint, so dass die erzeugten Schichten miteinander in Kontakt kommen. Es folgt eine Kompaktierung durch ein System von Walzen. Der resultierende flächige SMC-Compound wird dann aufgerollt und mindestens drei Tage unter definierten Bedingungen gelagert, was als Reifung bezeichnet wird. Schließlich wird der flächige Sandwich von der Folie abgezogen, in Stücke geschnitten und unter Anwendung von Druck und Temperatur zu Formteilen verpresst. Formteile, welche mittels dieser Technik hergestellt werden, werden beispielsweise als Heckklappen von Automobilen eingesetzt.

Die Schutzkolloid-stabilisierten Vinylester-Ethylen-Copolymere in Form von Polymerpulver bewirken bei Einsatz als LPA einen sehr starken Antischrumpfeffekt und führen dabei zugleich zu einer sehr guten Pigmentierung der Komposit-Bauteile. Des Weiteren sind die Schutzkolloid-stabilisierten Vinylester-Ethylen-Copolymere in Form von Polymerpulver lagerstabil und lassen sich rasch auflösen, emulgieren oder dispergieren. In dieser Hinsicht sind die erfindungsgemäßen LPA insbesondere gegenüber den LPA in Form von Festharzen überlegen. Auf Grund des Ethylen-Gehalts der erfindungsgemäßen LPA werden erfindungsgemäß hergestellte Komposit-Bauteile auch mit Wasser abweisenden Eigenschaften ausgestattet, was sich auch positiv auf die Alterungsbeständigkeit der Komposit-Bauteile auswirkt. Die erfindungsgemäßen Komposit-Bauteile zeigen auch sehr gute mechanische Eigenschaften, beispielsweise Biegefestigkeiten und Biege-Elastiziätsmodule. Dies war insbesondere auch aus dem Grunde überraschend, da die erfindungsgemäßen LPA auf Grund des Ethylen-Gehaltes innerlich weichgemacht sind und folglich eine Verschlechterung der mechanischen Eigenschaften damit hergestellter Komposit-Bauteile zu befürchten gewesen wäre.

Die nachfolgenden Beispiele dienen zur weiteren Erläuterung der Erfindung, ohne diese in irgendeiner Weise einzuschränken.

### Herstellung von Low-Profile-Additiven (LPA):

LPA 1:
   Es wurde eine mit Polyvinylalkohol stabilisierte wässrige Dispersion eines Vinylacetat-Ethylen-Copolymers (80 Gew.-% Vinylacetat, 20 Gew.-% Ethylen, je bezogen auf das Gesamtgewicht des Copolymers; Tg -7°C; 12 Gew.-% Polyvinylalkohol, bezogen auf den Gesamtfestanteil der Dispersion) sprühgetrocknet. Die mittlere Korngröße des so erhaltenen Pulvers betrug 120 µm (Bestimmung nach Coulter; Gerät: Beckmann-Coulter LS 100Q).
V-LPA 2:
   Es wurde eine mit Polyvinylalkohol stabilisierte wässrige Dispersion eines Vinylacetat-VeoVa10-Copolymers (80 Gew.-% Vinylacetat, 20 Gew.-% VeoVa10, je bezogen auf das Gesamtgewicht des Copolymers; Tg 30°C; 12 Gew.-% Polyvinylalkohol, bezogen auf den Gesamtfestanteil der Dispersion) sprühgetrocknet. Die mittlere Korngröße des so erhaltenen Pulvers betrug 120 µm (Bestimmung nach Coulter; Gerät: Beckmann-Coulter LS 100Q).

### Herstellung von Komposit-Bauteilen:

Zuerst wurden das UP-Harz und alle Additive (s. Tabelle) bis auf die Glasfasern und Füllstoff (Calciumcarbonat) mit einem Dissolver in einem Behälter 2 Minuten vorgemischt (Harzpaste). In einem zweiten Schritt wurde diese Harzpaste in einem kleinen Laborkneter mit den Glasfasern und dem Calciumcarbonat vermischt. Die Knetzeit wurde zwischen 5 und 15 Minuten variiert (siehe Tabelle 2).
Der BMC-Compound (Bulk molding compound) wurde dann mit geeigneten Folien styroldicht eingepackt und 2 Tage bei 23°C gelagert (Reifezeit) und anschließend in eine Wickert-Presse eingelegt (Pressbedingungen: 3 Minuten, 160 °C, 730 KN Presskraft, 3 mm Plattendicke).

**Tabelle 1:**

| Komponenten | VBsp.1 | VBsp.2 | VBsp.3 | VBsp.4 | Bsp.5 |
|---|---|---|---|---|---|
| | [g] | [g] | [g] | [g] | [g] |
| Palapreg P 18-21 (UP-Harz)^{a)} | 62,5 | 62,5 | 62,5 | 62,5 | 62,5 |
| CC Ruß 9257-45 (Pigment) | 10 | 10 | 10 | 10 | 10 |
| C501^{b)} (35 Gew.-%ig in Styrol) | | 14,5 | | | |
| Palapreg P 814-01^{c)} | | | 15 | | |
| V-LPA 2 | | | | 5 | |
| LPA 1 | | | | | 5 |
| | | | | | |
| Styrol | 24,38 | 8,5 | 8 | 18 | 18 |
| Peroxid (Trigonox C) | 1 | 1 | 1 | 1 | 1 |
| Peroxid (Trigonox 21) | 0,5 | 0,5 | 0,5 | 0,5 | 0,5 |
| Additive BYK 9010 | 0,5 | 0,5 | 0,5 | 0,5 | 0,5 |
| Luvato MK 35 (Katalysator) | 3 | 3 | 3 | 3 | 3 |
| Calciumstearat (Gleitmittel) | 4 | 4 | 4 | 4 | 4 |
| PBQ^{d)} (Inhibitor) | 0,3 | 0,3 | 0,3 | 0,3 | 0,3 |
| Millicarb OG (Füllstoff) | 300 | 300 | 300 | 300 | 300 |
| Hydrochinon (Stabilisator) | 0,03 | 0,03 | 0,03 | 0,03 | 0,03 |
| Owens Corning 163D-14C (4mm Länge) (Glasfaser) | 45 | 45 | 45 | 45 | 45 |

| | | | | | |
|---|---|---|---|---|---|
| a) Handelsname der Firma DSM b) Vinnapas C501 (Festharz auf Basis von 99 Gew.-% Vinylacetat, 1 Gew.-% Crotonsäure; Handelsname der Firma Wacker Polymers); c) Handelsname der Firma DSM, 33 Gew.-%ige Lösung von Polystyrol in Styrol^{b)} ; d) p-Hydrochinon in Form einer 10 Gew.-%igen Lösung in Methylmethacrylat. | | | | | |

Die so erhaltenen, schwarz-pigmentierten Platten wurden nach Abkühlung auf Raumtemperatur wie folgt ausgetestet:
- zur Charakterisierung der mechanischen Eigenschaft wurde das E-Modul gemäß DIN EN ISO 1425 bestimmt;
- Schrumpfwerte (linearer Schrumpf): Volumenänderung wurde mittels Abmessen bestimmt und in Prozent-Werten angegeben. Minuswerte zeigen an, dass das Komposit-Bauteil größer als die ursprüngliche Form war.
- die Pigmentierung wurde nach optischen Beurteilungskriterien bestimmt (- = Marmoreffekt, ungleichmäßige Pigmentverteilung; +++ = homogene Verteilung der Pigmente, einheitlicher Farbeindruck; die Bewertungen mit + bzw. ++ geben entsprechende Zwischenstufen an).
Die Ergebnisse der Austestung sind in Tabelle 2 aufgeführt.

**Tabelle 2: Austestung:**

| Komposit-Bauteil | VBsp. 1 | VBsp. 2 | VBsp. 3 | VBsp. 4 | VBsp. 4 | VBsp. 4 | Bsp.5 |
|---|---|---|---|---|---|---|---|
| Knetzeit [min] | 5 | 5 | 5 | 5 | 15 | 5 | 15 |
| Linearer Schrumpf [%] | 0,41 | 0,10 | 0,21 | 0,2 | 0,18 | 0,18 | 0,13 |
| Pigmentierung | +++ | - | +++ | - | + | ++ | +++ |
| E-Modul [MPa] | 12584 | 14219 | 14300 | 14001 | 14022 | 14011 | 14221 |
| Glanz¹⁾ | 50 | 82 | 57 | 61 | 62 | 66 | 81 |
| Longwave²⁾ | 12,0 | 1,8 | 3,3 | 3,5 | 2,5 | 2,8 | 1,8 |
| Shortwave ²⁾ | 32,2 | 12,7 | 14,0 | 16,0 | 13,5 | 14,9 | 12,6 |

| | | | | | | | |
|---|---|---|---|---|---|---|---|
| 1) Bestimmt mit dem Messgerät Byk-Gardner micro-haze plus. 2) Bestimmt mit dem Messgerät Byk-Gardner micro-wave scan. | | | | | | | |

In Vergleichsbeispiel VBsp.2 (Vinylacetatcopolymer C 501 als LPA) wurde zwar der niedrigste Schrumpf erreicht, es trat jedoch ein ausgeprägter Marmoreffekt auf (ungleiche Verteilung des Pigments durch Morphologie). In Vergleichsbeispiel VBsp.3 (Polystyrol als LPA) wurde zwar eine gute Pigmentierung erreicht, der lineare Schrumpf war jedoch mehr als doppelt so hoch als in Vergleichsbeispiel VBsp.2.

Nur im erfindungsgemäßen Beispiel Bsp.5 wurde sowohl eine sehr gute Pigmentierung als auch ein niedriger Schrumpf erreicht. Das erfindungsgemäße Beispiel 5 zeichnet sich außerdem durch eine sehr gute Oberflächenqualität aus (niedrige Shortwave und Longwave Werte: Kennzeichen für geringe Oberflächenwelligkeit) und eine glänzende Oberfläche aus. Die Vergleichsbeispiele VBsp.1 , VBsp.3 und VBsp.4 können dagegen auch hinsichtlich Glanz und Oberflächenqualität nicht befriedigen.
Das erfindungsgemäße Bauteil des Bsp.5 zeichnet sich gegenüber dem Komposit-Bauteil VBsp.4, das ein Vinylacetat-VeoVa-Copolymer in Form eines in Wasser redispergierbaren Pulvers als LPA enthält, durch eine bessere Pigmentierung, eine bessere Oberflächenqualität (Glanz, Shortwave, bzw. Longwave) und zugleich durch einen niedrigeren Schrumpf aus.

## Patentansprüche

1. Verwendung von Schutzkolloid-stabilisierten Vinylester-Ethylen-Copolymeren in Form von Polymerpulver als Low-Profile-Additive (LPA).

2. Verwendung von Vinylester-Ethylen-Copolymeren nach Anspruch 1, **dadurch gekennzeichnet, dass** die Vinylester-Ethylen-Copolymere erhältlich sind durch radikalisch initiierte Polymerisation von
a) einem oder mehreren Vinylestern und
b) Ethylen und gegebenenfalls
c) einem oder mehreren weiteren ethylenisch ungesättigten Comonomeren.

3. Verwendung von Vinylester-Ethylen-Copolymeren nach Anspruch 1 oder 2, **dadurch gekennzeichnet, dass** die Vinylester-Ethylen-Copolymere 5 bis 70 Gew.-% Ethylen b) enthalten, bezogen auf die Gesamtmasse der Vinylester-Ethylen-Copolymere.

4. Verwendung von Vinylester-Ethylen-Copolymeren nach Anspruch 2 oder 3, **dadurch gekennzeichnet, dass** als Vinylester a) Vinylester von Carbonsäuren mit 1 bis 15 C-Atomen eingesetzt werden.

5. Verwendung von Vinylester-Ethylen-Copolymeren nach Anspruch 1 bis 4, **dadurch gekennzeichnet, dass** die Schutzkolloid-stabilisierten Vinylester-Ethylen-Copolymere in Form von Polymerpulver mit einem oder mehreren Schutzkolloiden oder einem oder mehreren Emulgatoren stabilisiert sind.

6. Verwendung von Vinylester-Ethylen-Copolymeren nach Anspruch 1 bis 5, **dadurch gekennzeichnet, dass** die Schutzkolloid-stabilisierten Vinylester-Ethylen-Copolymere in Form von Polymerpulver mittlere Partikeldurchmesser zwischen 0,1 und 500 Mikrometer haben (Bestimmung nach Coulter).

7. Radikalisch vernetzbare Polymerisat-Zusammensetzungen enthaltend ein oder mehrere radikalisch vernetzbare Polymerisate, ein oder mehrere ethylenisch ungesättigte Monomere (reaktive Monomere) und gegebenenfalls Initiatoren, gegebenenfalls Füllstoffe sowie gegebenenfalls weitere Zusätze, **dadurch gekennzeichnet, dass**
zusätzlich ein oder mehrere Schutzkolloid-stabilisierte Vinylester-Ethylen-Copolymere in Form von Polymerpulver enthalten sind.

8. Radikalisch vernetzbare Polymerisat-Zusammensetzungen nach Anspruch 7, **dadurch gekennzeichnet, dass**
als radikalisch vernetzbare Polymerisate ungesättigte Polyesterharze oder Vinylesterharze eingesetzt werden.

9. Verfahren zur Herstellung von radikalisch vernetzbaren Polymerisat-Zusammensetzungen durch Mischen von einem oder mehreren radikalisch vernetzbaren Polymerisaten, einem oder mehreren ethylenisch ungesättigten Monomeren (reaktive Monomere) und gegebenenfalls von Initiatoren, gegebenenfalls von Füllstoffen, gegebenenfalls von Verstärkungsmaterialien sowie gegebenenfalls von weiteren Additiven oder Zusätzen, **dadurch gekennzeichnet, dass**
zusätzlich ein oder mehrere Schutzkolloid-stabilisierte Vinylester-Ethylen-Copolymere in Form von Polymerpulver beigemischt werden.

10. Komposit-Bauteile erhältlich durch Härten der radikalisch vernetzbaren Polymerisat-Zusammensetzungen nach Anspruch 7 oder 8.

## Claims

1. Use of protective colloid-stabilized vinyl ester-ethylene copolymers in the form of polymer powder as low-profile additives (LPAs).

2. Use of vinyl ester-ethylene copolymers according to Claim 1, **characterized in that** the vinyl ester-ethylene copolymers are obtainable by radically initiated polymerization of
a) one or more vinyl esters and
b) ethylene and optionally
c) one or more further ethylenically unsaturated comonomers.

3. Use of vinyl ester-ethylene copolymers according to Claim 1 or 2, **characterized in that** the vinyl ester-ethylene copolymers contain 5% to 70% by weight of ethylene b), based on the total mass of the vinyl ester-ethylene copolymers.

4. Use of vinyl ester-ethylene copolymers according to Claim 2 or 3, **characterized in that** vinyl esters a) used are vinyl esters of carboxylic acids having 1 to 15 C atoms.

5. Use of vinyl ester-ethylene copolymers according to Claim 1 to 4, **characterized in that** the protective colloid-stabilized vinyl ester-ethylene copolymers in the form of polymer powder are stabilized with one or more protective colloids or with one or more emulsifiers.

6. Use of vinyl ester-ethylene copolymers according to Claim 1 to 5, **characterized in that** the protective colloid-stabilized vinyl ester-ethylene copolymers in the form of polymer powder have average particle diameters between 0.1 and 500 micrometers (Coulter determination).

7. Radically crosslinkable polymer compositions comprising one or more radically crosslinkable polymers, one or more ethylenically unsaturated monomers (reactive monomers) and optionally initiators, optionally fillers, and optionally further additions, **characterized in that**
additionally one or more protective colloid-stabilized vinyl ester-ethylene copolymers in the form of polymer powder are present.

8. Radically crosslinkable polymer compositions according to Claim 7, **characterized in that**
radically crosslinkable polymers used are unsaturated polyester resins or vinyl ester resins.

9. Process for producing radically crosslinkable polymer compositions by mixing one or more radically crosslinkable polymers, one or more ethylenically unsaturated monomers (reactive monomers) and optionally initiators, optionally fillers, optionally reinforcing materials, and optionally further additives or additions, **characterized in that**
additionally one or more protective colloid-stabilized vinyl ester-ethylene copolymers in the form of polymer powder are admixed.

10. Composite components obtainable by curing the radically crosslinkable polymer compositions according to Claim 7 or 8.

## Revendications

1. Utilisation de copolymères ester de vinyle-éthylène stabilisés par des colloïdes protecteurs sous la forme de poudre polymère en tant qu'additifs à profil bas (LPA).

2. Utilisation de copolymères ester de vinyle-éthylène selon la revendication 1, **caractérisée en ce que** les copolymères ester de vinyle-éthylène peuvent être obtenus par polymérisation initiée par voie radicalaire de
a) un ou plusieurs esters de vinyle et
b) de l'éthylène et éventuellement
c) un ou plusieurs comonomères éthyléniquement insaturés supplémentaires.

3. Utilisation de copolymères ester de vinyle-éthylène selon la revendication 1 ou 2, **caractérisée en ce que** les copolymères ester de vinyle-éthylène contiennent 5 à 70 % en poids d'éthylène b), par rapport à la masse totale des copolymères ester de vinyle-éthylène.

4. Utilisation de copolymères ester de vinyle-éthylène selon la revendication 2 ou 3, **caractérisée en ce que** des esters de vinyle d'acides carboxyliques contenant 1 à 15 atomes C sont utilisés en tant qu'esters de vinyle a).

5. Utilisation de copolymères ester de vinyle-éthylène selon les revendications 1 à 4, **caractérisée en ce que** les copolymères ester de vinyle-éthylène stabilisés par des colloïdes protecteurs sous la forme de poudre polymère sont stabilisés avec un ou plusieurs colloïdes protecteurs ou un ou plusieurs émulsifiants.

6. Utilisation de copolymères ester de vinyle-éthylène selon les revendications 1 à 5, **caractérisée en ce que** les copolymères ester de vinyle-éthylène stabilisés par des colloïdes protecteurs sous la forme de poudre polymère ont des diamètres de particules moyens compris entre 0,1 et 500 micromètres (détermination selon Coulter).

7. Compositions polymères réticulables par voie radicalaire contenant un ou plusieurs polymères réticulables par voie radicalaire, un ou plusieurs monomères éthyléniquement insaturés (monomères réactifs) et éventuellement des initiateurs, éventuellement des charges et éventuellement des additifs supplémentaires, **caractérisées en ce que** un ou plusieurs copolymères ester de vinyle-éthylène stabilisés par des colloïdes protecteurs sous la forme de poudre polymère sont également contenus.

8. Compositions polymères réticulables par voie radicalaire selon la revendication 7, **caractérisées en ce que** des résines de polyester insaturées ou des résines d'ester de vinyle sont utilisées en tant que polymères réticulables par voie radicalaire.

9. Procédé de fabrication de compositions polymères réticulables par voie radicalaire par mélange d'un ou de plusieurs polymères réticulables par voie radicalaire, d'un ou de plusieurs monomères éthyléniquement insaturés (monomères réactifs) et éventuellement d'initiateurs, éventuellement de charges, éventuellement de matériaux renforçants et éventuellement d'additifs ou d'ajouts supplémentaires, **caractérisé en ce que**
un ou plusieurs copolymères ester de vinyle-éthylène stabilisés par des colloïdes protecteurs sous la forme de poudre polymère sont également incorporés.

10. Composants composites pouvant être obtenus par durcissement des compositions polymères réticulables par voie radicalaire selon la revendication 7 ou 8.
